Europäisches Patentamt

European Patent Office

Office européen des brevets

(11) Veröffentlichungsnummer: **0 459 175 A1**

## (12) EUROPÄISCHE PATENTANMELDUNG

(21) Anmeldenummer: 91107173.6

(22) Anmeldetag: 03.05.91

(51) Int. Cl.5: **A01B 49/06**, A01C 7/06

(30) Priorität: 16.05.90 DE 4015736

(43) Veröffentlichungstag der Anmeldung:
04.12.91 Patentblatt 91/49

(84) Benannte Vertragsstaaten:
**BE DE ES FR GB NL**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Mispel, Andrea**
**Lobbertkamp 10**
**W-4500 Osnabrück(DE)**
Erfinder: **Hülsmann, Werner**
**Voxtruper Strasse 118**
**W-4500 Osnabrück(DE)**
Erfinder: **Kemper, Martin**
**Fontanestrasse 15**
**W-4506 Hagen am T.W.(DE)**
Erfinder: **Scheufler, Bernd, Dr.**
**Am Amazonenwerk 101**
**W-4507 Hasbergen(DE)**

(54) Landwirtschaftliche Gerätekombination.

(57) Landwirtschaftliche Gerätekombination, bestehend aus einer Bodenwalze (2), auf der Bodenwalze aufgesattelten Vorratsbehälter (4) zum Ausbringen von Dünger, Mikrogranulat u.a. mittels angetriebener Dosierorgane, einer hinter der Bodenwalze angeordneten Einzelkornsämaschine (3,49) mit angetriebenen Vereinzelungselementen, wobei die Dosierorgane des Düngervorratsbehälters (4) über eine Antriebsvorrichtung (34,36,37) von der Bodenwalze (2) angetrieben werden. Um auf einfachste Weise einen optimalen Antrieb für die Dosierorgane von Düngervorratsbehältern (4) und Einzelkornsämaschine (3,49) zu gewährleisten, ist vorgesehen, daß die Dosierorgane der Einzelkornsämaschine (3,49) ebenfalls über eine Antriebsvorrichtung (34,36,37) von der Bodenwalze angetrieben werden.

FIG. 3

EP 0 459 175 A1

Die Erfindung betrifft eine landwirschaftliche Gerätekombination gemäß Oberbegriff des Patentanspruches 1.

Eine derartige landwirtschaftliche Gerätekombination ist durch die europäische Patentanmeldung 02 64 621 bekannt. Bei dieser Gerätekombination erfolgt der Antrieb für die Dosierorgane des Düngervorratsbehälters über eine Antriebsvorrichtung von der Bodenwalze. Die Vereinzelungselemente der Einzelkornsämaschine werden von sich in Betriebsstellung auf den Boden abstützenden, separaten Antriebsrädern angetrieben.

Der Erfindung liegt nun die Aufgabe zugrunde, auf einfachste Weise einen optimalen Antrieb für die Dosierorgane von Düngervorratsbehältern und Einzelkornsämaschine zu gewährleisten.

Diese Aufgabe wird in erfindungsgemäßer Weise dadurch gelöst, daß die Dosierorgane der Einzelkornsämaschine ebenfalls über eine Antriebsvorrichtung von der Bodenwalze angetrieben werden.

Infolge dieser Maßnahmen wird ein optimaler Antrieb für die Dosierorgane von Düngervorratsbehälter und Einzelkornsämaschine geschaffen. Die bei der bekannten Gerätekombination, für den Antrieb der als Vereinzelungselemente ausgebildeten Dosierorgane der Einzelungssämaschine notwendigen, sich in Betriebsstellung auf dem Boden abstützenden Antriebsräder werden somit überflüssig. Hierdurch steht der ansonsten von den zwischen den einzelnen Säaggregaten angeordneten Antriebsrädern benötigte Platz zusätzlich zur Verfügung, wodurch sich die Reihenabstände der einzelnen, nebeneinander angeordneten Säaggregate ohne Rücksichtnahme auf die hier nicht vorhandenen Antriebsräder einstellen lassen. Da die sich auf dem Boden abstützende Bodenwalze eine große Aufstandsfläche gegenüber den einzelnen Antriebsrädern aufweist und hierdurch nicht so tief in den Boden einsinkt, verringert sich der auftretende Schlupf der Bodenwalze gegenüber den einzelnen Antriebsrädern.

Bei der Ausführungsform ist erfindungsgemäß vorgesehen, daß die Walze über eine Antriebsvorrichtung die Dosierorgane des Düngerstreuers, der Säaggregate und des Mikrogranulatstreuers antreibt. Hierdurch ergibt sich ein einfach zu handhabender, zentraler Antrieb für die Ausbringorgane der landwirtschaftlichen Gerätekombination.

Zur einfachen Übertragung der Drehbewegung von der Walze zu den Dosierorganen für die Ausbringorgane der landwirtschaftlichen Gerätekombination ist erfindungsgemäß vorgesehen, daß die Dosierorgane von der Einzelkornsämaschine und dem Düngervorratsbehälter über einen gemeinsamen Antriebsstrang angetrieben werden.

Desweiteren ist erfindungsgemäß vorgesehen, daß auf der Welle der Bodenwalze ein Antriebselement angeordnet ist, mittels welchem über eine Antriebsverbindung die Eingangswelle des Regelgetriebes der Einzelkornsämaschine angetrieben wird, daß die Eingangswelle des Regelgetriebes der Einzelkornsämaschine über eine Antriebsverbindung mit der Eingangswelle des Regelgetriebes für die Dosierorgane des Düngervorratsbehälters verbunden ist.

In einer besonders bevorzugten Ausführungsform ist in erfindungsgemäßer Weise vorgesehen, daß die Eingangswelle des Regelgetriebes der Einzelkornsämaschine über eine Antriebsverbindung mit der Rührwelle verbunden ist, daß weiterhin die Rührwelle auf der anderen Seite über eine Antriebsverbindung mit der Eingangswelle des Regelgetriebes des Düngervorratsbehälters verbunden ist.

Weitere Einzelheiten der Erfindung sind den übrigen Unteransprüchen, der Beispielsbeschreibung und den Zeichnungen zu entnehmen. Hierbei zeigt

Fig. 1 die in erfindungsgemäßer Weise ausgerüstete landwirtschaftliche Gerätekombination mit einem vorgeschalteten, als Rüttelegge ausgebildeten Bodenbearbeitungsgerät in Prinzipdarstellung und in der Seitenansicht,

Fig. 2 die in erfindungsgemäßer Weise ausgerüstete landwirtschaftliche Gerätekombination gemäß Fig. 1 ohne vorgeschaltetes Bodenbearbeitungsgerät in der Seitenansicht,

Fig. 3 die landwirtschaftliche Gerätekombination gemäß Fig. 2 in der Draufsicht,

Fig. 4 einen aus Bodenwalze und Bodenbearbeitungsgerät bestehender Geräteverbund in der Seitenansicht,

Fig. 5 der Geräteverbund gemäß Fig. 4, mit aufgesattelter, als Einzelkornsämaschine ausgebildeter Bestellmaschine,

Fig. 6 der Geräteverbund gemäß Fig. 4, mit als Drillmaschine ausgebildeter, auf die Bodenwalze aufgesattelter Bestellmaschine und

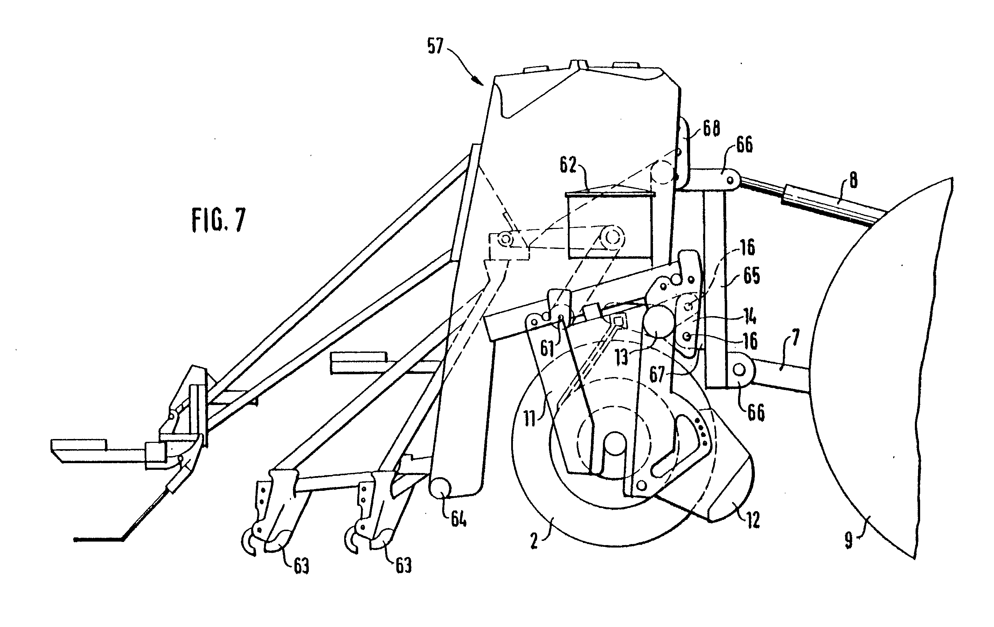

Fig. 7 die Bodenwalze mit aufgesattelter Bestellmaschine gemäß Fig. 6, wobei die Gerätekombination im Solobetrieb direkt hinter dem Ackerschlepper eingesetzt wird.

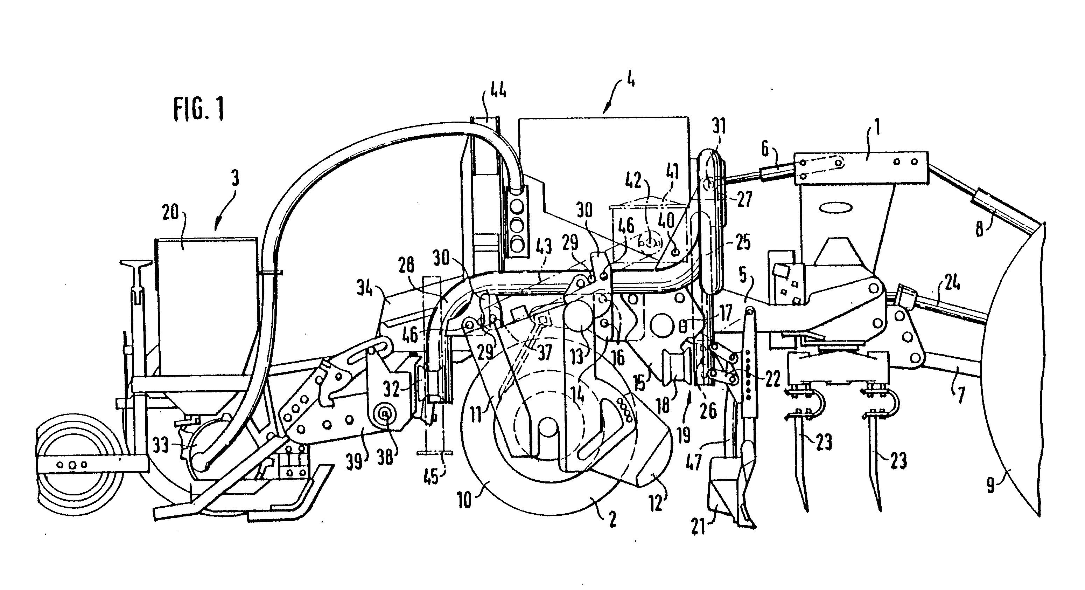

Die Fig. 1 zeigt den Geräteverbund bestehend aus dem angetriebenen, als Rüttelegge ausgebildeten Bodenbearbeitungsgerät 1 und der aus der Bodenwalze 2 und der als Einzelkornsämaschine 3 mit der Düngerstreueinrichtung 4 ausgebildeten landwirtschaftlichen Gerätekombination. Die landwirtschaftliche Gerätekombination ist über die Tragarme 5 und dem Oberlenker 6 mit dem Bodenbearbeitungsgerät 1 verbunden. Der aus Bodenbearbeitungsgerät 1 und Gerätekombination bestehende Geräteverbund ist als Anbaugerät ausgebildet und über die beiden Unterlenker 7 und den Oberlenker 8 mit dem Dreipunktkraftheber des Ackerschleppers 9 verbunden.

Die aus nebeneinander angeordneten Reifen 10 bestehende Bodenwalze ist drehbar in dem Tragrahmen 11 gelagert. Vor der Bodenwalze 2 ist das in unterschiedlichen Höhen gegenüber dem Tragrahmen 11 der Bodenwalze 2 einstellbare Planierschild 12 befestigt. An dem Querrohr 13 des Tragrahmens 11 der Bodenwalze 2 sind die Traglaschen 14 angeschweißt. In diesen Traglaschen 14 sind die plattenförmig ausgebildeten Kupplungselemente 15 mittels Steckbolzen 16 befestigt. Die plattenförmigen Elemente der Kupplungselemente 15 weisen einen derartigen Abstand zueinander auf, so daß der jeweilige Tragarm 5 zwischen diese Platten geführt und mittels des Steckbolzens 17 befestigt wird. Die Kupplungselemente 15 sind über das Querrohr 18 miteinander verbunden und bilden so den Zwischenrahmen 19. An diesem Zwischenrahmen 19 sind die mit den einzelnen Einzelkornsäaggregaten 20 der Einzelkornsämaschine 3 fluchtenden Düngerschare 21 mittels der federbelasteten Parallelogrammaufhängung 22 ausweichbar befestigt. Die Düngerschare 21 sind höhenbeweglich gegenüber dem Zwischenrahmen 19 einstellbar, so daß sich unterschiedliche Ablagetiefen, des von den Düngerscharen in den von den Zinken 23 des Bodenbearbeitungsgerätes 1 bearbeiteten Boden abgelegten Düngers einstellen lassen. Der Antrieb des Bodenbearbeitungsgerätes 1 erfolgt über die Gelenkwelle 24 von der Zapfwelle des Ackerschleppers 9.

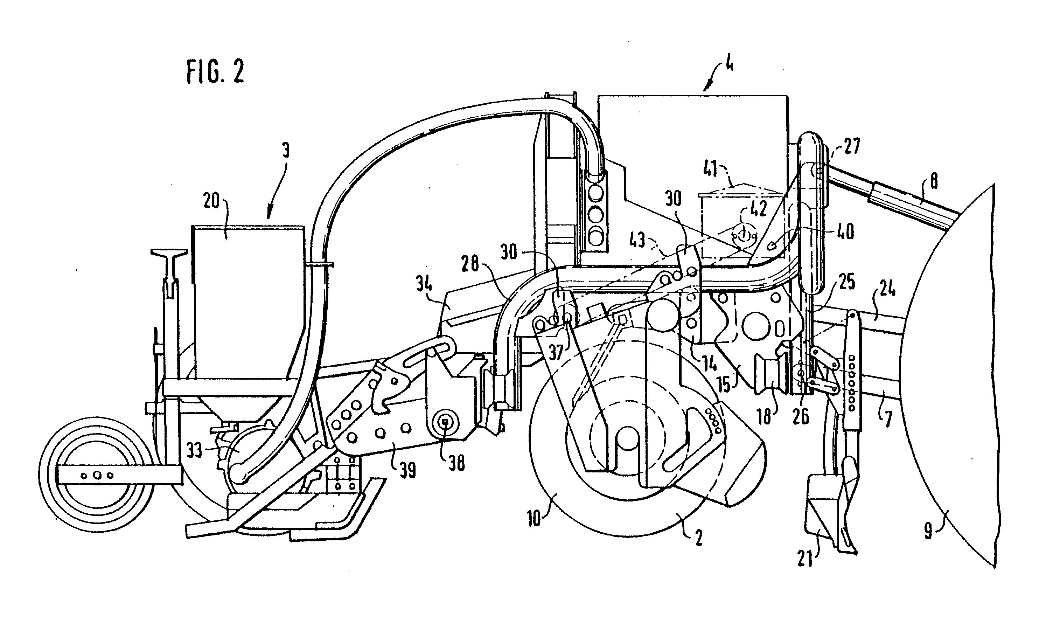

Desweiteren weist der Zwischenrahmen 19 die Rahmenkonstruktion 25 auf, die mit den Dreipunktkupplungselementen 26 und 27 ausgerüstet ist, so daß sich die landwirtschaftliche Gerätekombination entsprechend Fig. 2 auch ohne vorgeschaltetes Bodenbearbeitungsgerät direkt mit dem Dreipunktkraftheber des Ackerschleppers 9 kuppeln läßt. Die unteren Dreipunktkupplungselemente 26 weisen einen geringeren Abstand zueinander auf, als die leicht lösbaren, als Traglaschen 14 ausgebildeten Kupplungselemente.

Die als Einzelkornsämaschine 3 mit der Düngerstreueinrichtung 4 ausgebildete Verteilmaschine weist den Rahmen 28 mit den Kupplungspunkten 29 auf. Diese Kupplungspunkte 29 lagern in den Fangtaschen 30 des Tragrahmens 11 der Bodenwalze 2. Im vorderen Bereich wird der Rahmen 28 der Bestellmaschine über die als Dreipunktkupplungselemente 27 ausgebildeten Fangtaschen über den Steckbolzen 31 mit dem Zwischenrahmen 19 verbunden.

Hinter der Bodenwalze 2 ist an dem Rahmen 28 der Querbalken 32 befestigt, an dem die nebeneinander angeordneten Einzelkornsäaggregate 20 angelenkt sind. Die Einzelkornsäaggregate 20 sind verschiebbar an diesem Querbalken 32 befestigt. Der Antrieb der sich in den Sägehäusen 33 der Einzelkornsäaggregate 20 befindlichen Vereinzelungsorgane erfolgt über das Einstellgetriebe 34 von der Bodenwalze 2. In Fahrtrichtung 35 gesehen befindet sich auf der linken Seite der als Kettentrieb 36 ausgebildete Antrieb für die Eingangswelle 37 des Einstellgetriebes 34 für die Vereinzelungsorgane der Säaggregate 20. Beim Abrollen der Bodenwalze 2 auf der Bodenoberfläche erfolgt mittels des Kettentriebes 36 und des Einstellgetriebes 34 der Antrieb der Antriebswelle 38 für die Einzelkornsäaggregate 20. Über die in den Unterlenkern 39 angeordnete Antriebseinrichtung werden die in den Sägehäusen 33 angeordneten Vereinzelungsorgane angetrieben.

Der Antrieb der auf der Dosierwelle 40 angeodneten Dosierorgane der Düngerstreueinrichtung 4 erfolgt vom stufenlos einstellbaren Dosiergetriebe 41, welches auf der linken Seite der Düngerstreueinrichtung 4 angeordnet ist. Der Antrieb des Dosiergetriebes 41 erfolgt wiederum über die im Behälter der Düngerstreueinrichtung 4 sich befindliche Rührwelle 42. Diese Rührwelle 42 wiederum wird auf der rechten Maschinenseite von der als Kettentrieb ausgebildeten Antriebseinrichtung 43 angetrieben, die mit der durch das Einstellgetriebe 34 hindurchgeführten, von der Bodenwalze 2 angetriebenen Eingangswelle 37 für das Einstellgetriebe 34 zusammenwirkt. Wird der aus landwirtschaftlicher Gerätekombination und Bodenbearbeitungsgerät bestehende Geräteverbund mittels eines Ackerschleppers 9 während des Betriebes ausgehoben, wird die Drehbewegung der Bodenwalze von einer nicht näher dargestellten Bremseinrichtung unterbrochen.

Der Antrieb des Saugluftgebläses 44, zur Erzeugung des für die Vereinzelung notwendigen Unterdruckes, erfolgt über eine nicht näher dargestellte Gelenkwelle vom Bodenbearbeitungsgerät 1.

Soll nun die auf die Bodenwalze 2 aufgesattelte Bestellmaschine von der Bodenwalze abgekuppelt werden, ist der Geräteverbund mittels des Dreipunktkrafthebers des Ackerschleppers 9 auszuheben und die Abstellstützen 45 sind herunter zu lassen. Danach werden die Sicherungsbolzen 46 der Fangtaschen 30 sowie der Steckbolzen 31 im Bereich des Dreipunktkupplungselementes 27 entfernt und die zu den Düngerscharen 21 führenden Düngerleitungen 47 von den Düngerscharen 21 gelöst. Weiterhin ist noch die Kupplung 48 zwischen dem Kettentrieb 36 und der Eingangswelle 37 zu lösen. Nun werden das Bodenbearbeitungsgerät 1, der Zwischenrahmen 19 und die Bodenwalze 2, die noch miteinander verbunden sind, mittels der Dreipunkthydraulik des Ackerschleppers 9 abgesenkt und durch Vorwärtsfahren des Ackerschleppers 9 wird die auf die Bodenwalze aufgesattelte Verteilmaschine von der Bodenwalze getrennt.

Somit läßt sich die auf die Bodenwalze aufgesattelte, als Einzelkornsämaschine mit Düngerstreueinrichtung ausgebildete Verteilmaschine auf einfachste Weise von der Bodenwalze 2 abbauen, wobei für den Antrieb der Vereinzelungsorgane der Sämaschine und der Dosierorgane der Düngerstreueinrichtung 4 nur die eine Kupplung 48 des gemeinsamen Antriebsstanges gelöst werden muß. Das Zusammenkuppeln erfolgt genau in umgekehrter Reihenfolge.

Dadurch, daß die Düngerschare der Düngerstreueinrichtung an dem Zwischenrahmen 19 und nicht direkt mit dem Rahmen 28 von Einzelkornsämaschine 3 und Düngerstreueinrichtung 4 verbunden ist, ergibt sich ein leicht lösbares Kupplungssystem bei sich zwischen Bodenwalze 2 und Bodenbearbeitungsgerät 1 befindlichen Düngerscharen 21. Durch die Anordnung des Zwischenrahmens 19 zwischen Bodenwalze 2 und Bodenbearbeitungsgerät 1 werden erst die räumlichen Verhältnisse für die Anordnung der Düngersäschare 21 in diesem Bereich geschaffen.

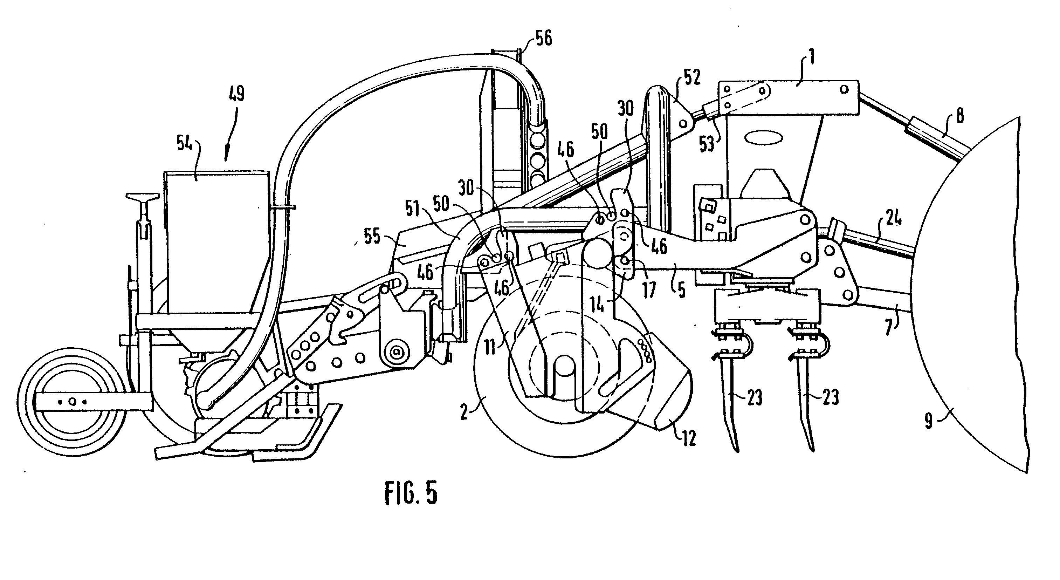

Soll nun der sich noch zwischen dem Bodenbearbeitungsgerät 1 und der Nachlaufwalze 2 befindliche Zwischenrahmen 19 demontiert werden, sind die Steckbolzen 16 und 17 zu entfernen und der Zwischenrahmen 19 läßt sich demontieren. Soll die Bodenwalze 2 hinter dem Bodenbearbeitungsgerät 1 als reine Nachlaufwalze eingesetzt werden, werden die Tragarme 5 mittels der Steckverbindungen 16 mit den am Querrohr 13 des Tragrahmens 11 der Nachlaufwalze angeordneten Traglaschen 14 verbunden. Da sich die Bodenbearbeitungsmaschine 1 auf der Nachlaufwalze 2 abstützt, wird die Arbeitstiefe des Bodenbearbeitungsgerätes 1 mittels der Tragarme 5 eingestellt. Auf die über die Tragarme 5 mit dem Bodenbearbeitungsgerät 1 verbundenen Nachlaufwalze 2 läßt sich beispielsweise die Einzelkornsämaschine 49 aufsatteln, so daß die landwirtschaftliche Gerätekombination gemäß Fig. 5 entsteht. Hierbei wird die Bodenwalze 2 rückwärts an die auf nicht näher dargestellte Abstellstützen sich abstützende Einzelkornsämaschine 49 herangefahren, so daß die Kupplungspunkte 50 des Tragrahmens 51 des Einzelkornsägerätes 49 in die am Rahmen 11 der Bodenwalze angeordneten Fangtaschen 30 einrasten. Durch Einstecken der Sicherungsbolzen 46 wird die Einzelkornsämaschine 49 fest mit der Bodenwalze 2 gekoppelt. Der Rahmen 51 der Einzelkornsämaschine weist den Dreipunktkupplungspunkt 52 auf, an dem die Einzelkornsämaschine 49 mit dem Bodenbearbeitungsgerät 1 verbindende Oberlenker 53 angelenkt ist. Zur besseren Anpassung der landwirtschaftlichen Gerätekombination an Bodenunebenheiten ist der Tragarm 5 nur mittels eines Steckbolzens 17 an den Traglaschen 14 befestigt. Der Antrieb der einzelnen, nebeneinander angeordneten Einzelkornsäaggregate 54 erfolgt in der bereits erwähnten Weise von der Bodenwalze 2 über das Einstellgetriebe 55, nachdem die Antriebsverbindung des Kettentriebes 36 und der Eingangswelle 37 des Einstellgetriebes 55 mittels der Kupplung 48 verbunden wurde. Der Antrieb des Saugluftgebläses 56 zur Erzeugung des benötigten Unterdruckes für die Vereinzelungsorgane, erfolgt in bekannter Weise über das Bodenbearbeitungsgerät 1 mittels der Gelenkwelle 24 von der Schlepperzapfwelle des Ackerschleppers 9.

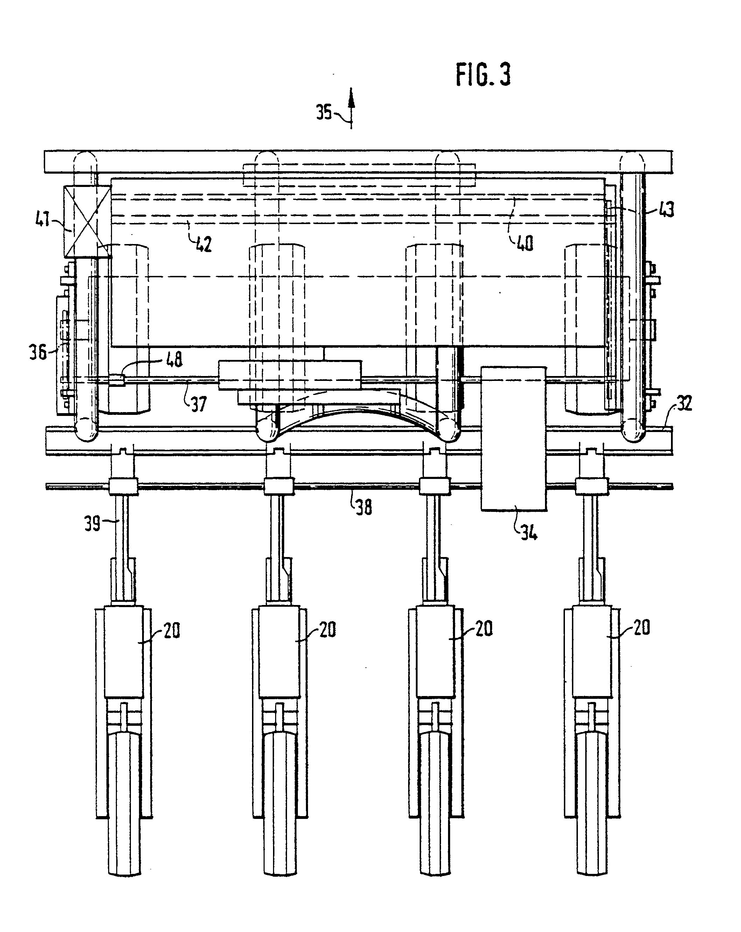

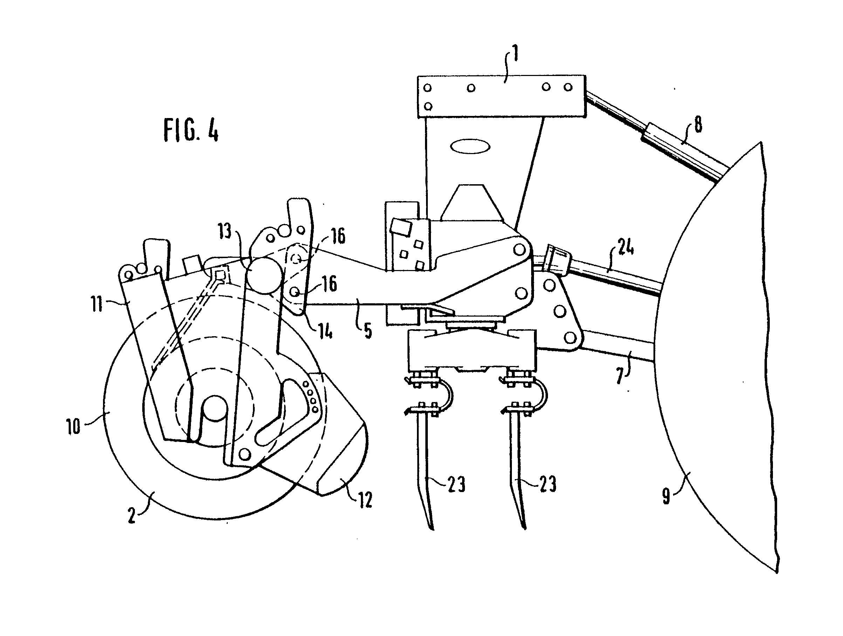

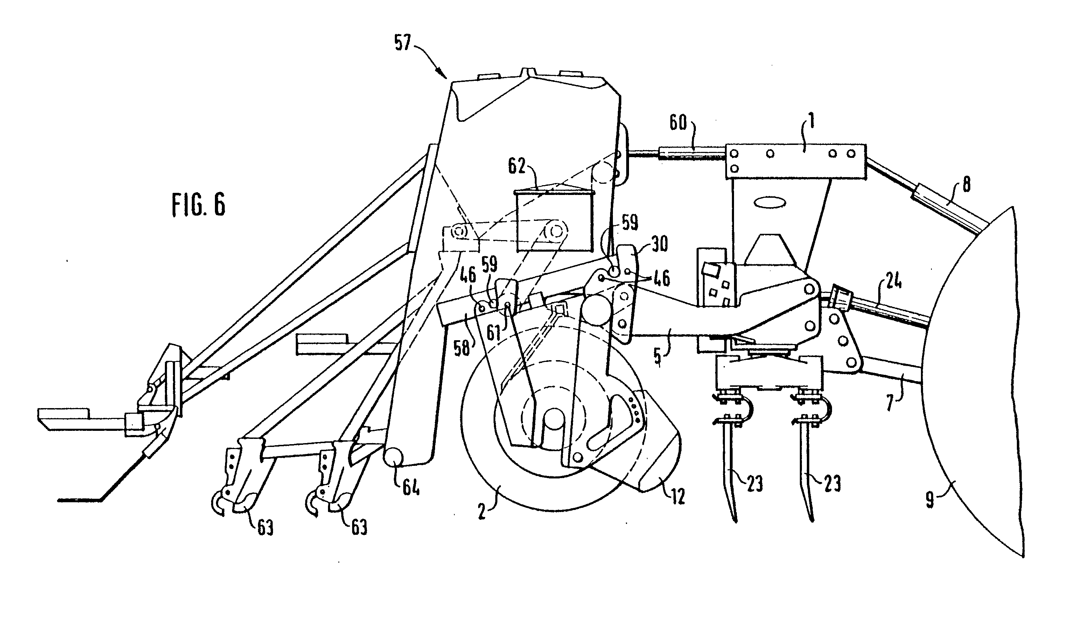

Auf die Bodenwalze 2 gemäß Fig. 4, läßt sich auch die Aufsatteldrillmaschine 57, gemäß Fig. 6, aufsatteln. Hierbei weist der Rahmen 58 der Aufsatteldrillmaschine 57 die Kupplungspunkte 59 auf, die in die Fangtaschen 30 der Bodenwalze 2 eingreifen. Zur sicheren Befestigung der Aufsatteldrillmaschine auf die Bodenwalze 2 werden die Sicherungsbolzen 46 zwischen den Rahmenteilen der beiden miteinander zu verbindenden Geräte eingesteckt. Der Oberlenker 60 verbindet das Bodenbearbeitungsgerät 1 mit der aufgesattelten Aufsatteldrillmaschine 57. Hiernach ist nur noch die Eingangswelle 61 für den Antrieb des stufenlosen Einstellgetriebes 62, über welches die Dosierorgane der Aufsatteldrillmaschine angetrieben werden, über die Kupplung 48 mit dem Kettentrieb 36 der Bodenwalze 2 in Fahrtrichtung gesehen auf der linken Maschinenseite entsprechend Fig. 3 zu verbinden. Die Säschare 63 sind in aufrechter Ebene bewegbar an dem hinter der Bodenwalze 2 angeordneten Querbalken 64 angelenkt. Das stufenlose Einstellgetriebe 62 befindet sich bei der Aufsatteldrillmaschine in Fahrtrichtung gesehen auf der rechten Maschinenseite. Der Antrieb der Dosierorgane erfolgt über diese Einstellgetriebe 62 von der Bodenwalze 2.

Soll die aus der Bodenwalze 2 und der aufgesattelten Aufsatteldrillmaschine 57 bestehende landwirtschaftliche Gerätekombination im Solobetrieb eingesetzt werden, wird der Zwischenrahmen 65 mit den Dreipunktkupplungselementen 66 für den Anschluß an den Dreipunktkraftheber des Ackerschleppers 9 notwendig. Der Zwischenrahmen 65 weist die Kupplungselemente 67 auf, welche in den am Querrohr 13 des Tragrahmens 11 der Bodenwalze 2 befestigten Traglaschen 14 mittels der Steckbolzen 16 befestigt ist. Im Bereich des oberen Dreipunktkupplungselementes 66 ist der Zwischenrahmen 65 an dem Dreipunktkupplungselement 68 der Aufsatteldrillmaschine 57 befestigt.

## Patentansprüche

1. Landwirtschaftliche Gerätekombination, bestehend aus einer Bodenwalze, auf der Bodenwalze aufgesattelten Vorratsbehälter zum Ausbringen von Dünger, Mikrogranulat u.a. mittels angetriebener Dosierorgane, einer hinter der Bodenwalze angeordneten Einzelkornsämaschine mit angetriebenen Vereinzelungselementen, wobei die Dosierorgane des Düngervorratsbehälters über eine Antriebsvorrichtung von der Bodenwalze angetrieben werden, dadurch gekennzeichnet, daß die Dosierorgane der Einzelkornsämaschine (3,49) ebenfalls über eine Antriebsvorrichtung (34,36,37,55) von der Bodenwalze (2) angetrieben werden.

2. Gerätekombination nach Anspruch 1, dadurch gekennzeichnet, daß die Walze (2) über eine Antriebsvorrichtung (34,36,37,42,43,55) die Dosierogane des Düngerstreuers (4), der Säaggregate (3,49) und des Mikrogranulatstreuers aufweist.

3. Gerätekombination nach Anspruch 1, dadurch gekennzeichnet, daß die Dosierorgane der Einzelkornsämaschine (3,49) und des Düngervorratsbehälters (4) über eine gemeinsame Antriebsvorrichtung (34,36,37,43,55) von der Bodenwalze (2) angetrieben werden.

4. Gerätekombination nach einem oder mehreren der vorstehenden Ansprüche, dadurch gekennzeichnet, daß die Dosierorgane von der Einzelkornsämaschine (3,49) und dem Düngervorratsbehälter (4) über einen gemeinsamen Antriebsstrang (34,36,37,42,43,55) angetrieben werden.

5. Gerätekombination nach einem oder mehreren der vorstehenden Ansprüche, dadurch gekennzeichnet, daß auf der Welle der Bodenwalze (2) ein Anstriebselement (36) angeordnet ist, mittels welchem über eine Antriebsverbindung (37) die Eingangswelle des Regelgetriebes (34,55) der Einzelkornsämaschine (3,49) angetrieben wird, daß die Eingangswelle des Regelgetriebes (34,55) der Einzelkornsämaschine (3,49) über eine Antriebsverbindung (42,43) mit der Eingangswelle des Regelgetriebes (41) für die Dosierorgane des Düngervorratsbehälters (4) verbunden ist.

6. Gerätekombination nach Anspruch 4, wobei der Düngervorratsbehälter eine im Düngervorratsbehälter durchlaufend angeordnete Rührwelle aufweist, dadurch gekennzeichnet, daß die Eingangswelle des Regelgetriebes (34,55) der Einzelkornsämaschine (3,49) über eine Antriebsverbindung (43) mit der Rührwelle (42) verbunden ist, daß weiterhin die Rührwelle (42) auf der anderen Seite über eine Antriebsverbindung mit der Eingangswelle des Regelgetriebes (41) des Düngervorratsbehälters (4) verbunden ist.

FIG.1

EP 0 459 175 A1

FIG. 2

EP 0 459 175 A1

# FIG. 3

FIG. 4

FIG. 5

EP 0 459 175 A1

FIG. 6

FIG. 7

EP 0 459 175 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 866 552 (R. H. LEIDIG)<br>* Abbildungen 1-3 * * Spalte 1, Zeile 9 - Zeile 20 * * Spalte 1, Zeile 48 - Zeile 59 * * Spalte 2, Zeile 16 - Zeile 38 * * Spalte 3, Zeile 17 - Spalte 4, Zeile 3 *<br>– – – | 1-6 | A 01 B 49/06<br>A 01 C 7/06 |
| X,A | US-A-3 797 418 (F. R. BRIDGER JR.)<br>* Abbildungen 1,2 * * Spalte 3, Zeile 51 - Zeile 60 *<br>– – – | 1-5,6 | |
| X | EP-A-0 356 606 (ACCORD LANDMASCHINEN HEINRICH & CO. GMBH)<br>* Abbildungen 1,2 * * Ansprüche 1,4,10,18 * * Spalte 4, Zeile 37 - Zeile 48 * * Spalte 5, Zeile 18 - Spalte 6, Zeile 8 *<br>– – – | 1-5 | |
| X | US-A-3 491 709 (L. FLEISCHER & R. MCGEE)<br>* Abbildungen 1,6,8 * * Spalte 2, Zeile 70 - Spalte 3, Zeile 9 *<br>* Spalte 4, Zeile 44 - Zeile 58 * * Spalte 5, Zeile 60 -Spalte 6, Zeile 6 *<br>– – – | 1-5 | |
| X | US-A-2 745 330 (N. A. NELSON)<br>* Abbildungen 1-3 * * Spalte 2, Zeile 32 - Zeile 39 * * Spalte 4, Zeile 71 - Spalte 5, Zeile 22 *<br>– – – | 1-5 | RECHERCHIERTE SACHGEBIETE (Int. Cl.5) |
| X | DE-A-2 738 211 (C. VAN DER LELY N.V.)<br>* Abbildung 1 * * Seite 6, Absatz 2 * * Seite 6, letzter Absatz *<br>* Seite 7, Absatz 2 *<br>– – – – – | 1-5 | A 01 B<br>A 01 C |

Der vorliegende Recherchenbericht wurde für alle Patentansprüche erstellt

| Recherchenort | Abschlußdatum der Recherche | Prüfer |
|---|---|---|
| Den Haag | 13 August 91 | RAVEN P.A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-------------------------------------------------------------
& : Mitglied der gleichen Patentfamilie, übereinstimmendes Dokument